# EUROPEAN PATENT APPLICATION

(11) **EP 1 921 475 A1**
(43) Date of publication of application: **14.05.2008**
(21) Application number: 06023357.4
(22) Date of filing: 09.11.2006
(51) Int. Cl.: G02B 6/255

(54) **Method for detecting a core of an optical fiber and method and apparatus for connecting optical fibers**

(71) Applicant: CCS Technology, Inc., Wilmington, DE 19803 (US)
(72) Inventor: Contag, Karsten, 81373 München (DE)
(74) Representative: Epping - Hermann - Fischer

(57) **Abstract**

A method for connecting optical fibers (11,12) comprises determining the position of the core of a fiber. In response to heating, the optical fibers (11,12) emit light of which an image can be recorded. The position of the core and/or the eccentricity of the fiber is determined from the recorded image. The core position and/or eccentricity can be used to align fibers for a subsequent fusion splicing operation. The process is suitable for, for example, bend optimized optical fibers (11,12), such as those having an annular region of holes in their claddings.

## Description

### Field of the Invention

The present invention relates to a method which detects the core of an optical fiber. In particular, the method is suited to determine the eccentricity of the core of the optical fiber. The method can be used to connect optical fibers, in particular, for fusion splicing the optical fibers. An apparatus that is suited to connect the optical fibers while detecting the cores of the optical fibers is concerned with the invention as well.

### Description of the Related Art

Optical fibers may include a core of glass and a cladding surrounding the core, the core and the cladding having different refractive indices so that an optical signal is guided through the core. The glass material may comprise silica or doped silica. In order to connect two optical fibers with each other, which includes connecting fibers from different cables and connecting a fiber to another piece of fiber comprised in a connector or a terminator, the fiber end material may be heated so that the fiber ends melt together and form one single continuous optical light wave guide. It is desired to achieve a predetermined attenuation with the spliced fibers. A known method to achieve low attenuation of a fusion splice includes that the cladding of the fibers and/or the cores of the to be spliced fibers are aligned with each other before the fiber ends start to melt. A usual task of a fusion splicing equipment includes the determination of the lateral offset between the fibers, which may be the offset of the fiber cores and/or the offset of the fiber claddings and the subsequent repositioning of the fiber ends in order to align them with each other based on the determined offsets.

For conventional, presently available fibers, several methods are known to a skilled technician to determine lateral offset between to be spliced fibers. A known method may use x-rays or ultraviolet radiation in order to excite the core of the optical fiber and emit visible light. The emitted visible light is guided through optical systems to a sensor which records an image of the emitted visible light. Another technology uses interferometry to determine the eccentricity of the core of an optical fiber. The mentioned methods are complex and require additional sources of radiation. Another method like WO 2006/050974 uses a combined system of short time heating of the fiber with a fusion arc to detect the core and illumination with a different light source to determine the contours of the cladding. The described method of WO 2006/050974 achieves good results for currently available single-mode or multi-mode fibers with single or multiple cores. However, for bend performance optical fibers that may include bend insensitive or bend optimized fibers, an illumination of the fiber may lead to a recorded image that is less suited for the alignment control.

### Summary of the Invention

It is desirable to have a method for detecting the core of an optical fiber which can be used for a wide range of optical fibers including, but not limited to, bend optimized optical fibers.

According to an embodiment of the present invention, a method of detecting a core of an optical fiber comprises operating a heating device for heating a bend optimized optical fiber, said optical fiber having a core and a cladding surrounding the core; heating the optical fiber during a short period of time so that the optical fiber emits light; recording an image of light emitted by the optical fiber; determining the position of the core of the optical fiber from the recorded image.

According to another embodiment, a method of connecting optical fibers with each other comprises positioning respective ends of a first bend optimized optical fiber and a second bend optimized optical fiber adjacent to each other, said first and second optical fibers having a core and a cladding surrounding the core; operating a heating device for heating the optical fibers; heating said respective ends of the first and second optical fibers during a short period of time so that the optical fibers emit light; recording an image of the light emitted by the first and second optical fibers; determining the position of the core of at least one of the optical fibers and determining the position of the cladding of the at least one of the optical fibers; heating said respective ends again to connect the optical fibers in response to the step of determining.

According to another embodiment, a method of connecting a first and a second optical fiber, comprises positioning respective ends of the first and second optical fibers adjacent to each other; performing the above mentioned method; then aligning the first and second fibers in response to the determined positions of the core; connecting the fibers with each other.

According to a different aspect of the invention, an apparatus for connecting optical fibers, comprises positioning elements for positioning respective ends of a first bend optimized optical fiber and a second bend optimized optical fiber adjacent to each other, said fibers each having a core and a cladding surrounding said core; a heating device for heating the optical fibers; said heating device configured to heat said respective ends of the first and second optical fibers during a short period of time so that the optical fibers emit light; a sensor for recording an image of the light emitted by the first and second optical fibers; a control unit for determining the position of the core of at least one of the optical fibers and determining the position of the cladding of the at least one of the optical fibers; said heating device configured to heat said respective ends again to connect the optical fibers in response to the determined position.

The above described methods are suited to perform core detection on bend insensitive or bend optimized fibers that have, for example, an annular region of holes in their claddings. The holes are non-periodically, preferably randomly distributed in the region. While conventional illumination techniques render an image that includes additional maxima and minima of the light intensity and that becomes variant when the fiber is rotated around its longitudinal axis, the methods according to the above described embodiments emit light which is generated within the fiber core and its claddings so that the image received from the light emitted from such fiber is sufficiently clear and stable so that the core can be detected with conventional algorithms from the recorded image.

### Brief Description of the Drawings

Hereinbelow the embodiments of the invention will be described in more detail in conjunction with the appended drawings. In different figures of the drawings, the same or corresponding elements are denoted with the same reference numerals.
- Figure 1: shows a splice equipment apparatus for connecting fibers by fusion splicing which can operate according to a method according to the invention.
- Figure 2: shows an optical arrangement disposed within the apparatus of Figure 1.
- Figure 3: shows a recorded image of two fibers before splicing.
- Figure 4: shows intensity profile taken along a scan line from Figure 3.
- Figure 5: shows a cross section of a bend performance optical fiber.
- Figure 6: shows a photograph of a cross section of a bend optimized optical fiber.

### Detailled Description of the Embodiments

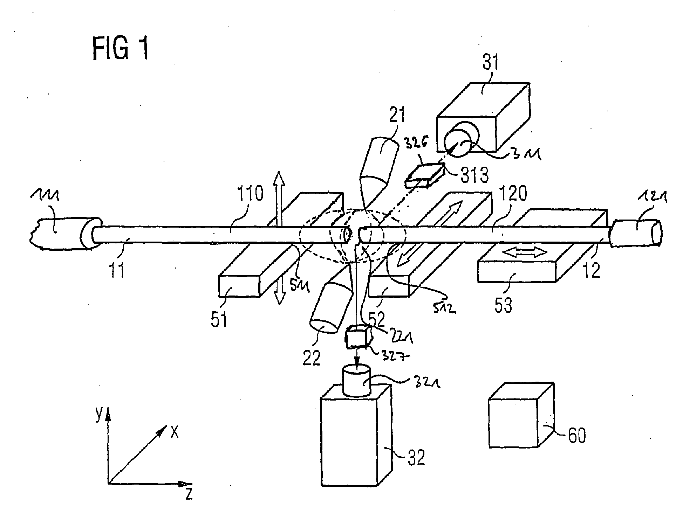

The apparatus of Figure 1 can be used to connect two optical fibers 11, 12 by application of heat from a heating device 21, 22. The heating device can generate an arc for welding the fibers together. The fibers 11, 12 include a fiber core which is surrounded by a cladding. The fibers are further coated with a polymer coating 111, 121 which has been removed from the fiber end portions 110, 120. The end portions 110, 120 have mirror end surfaces 1101, 1201 which face each other.

The fiber ends 110, 120 are each disposed in positioning elements 51, 52. The positioning elements 51, 52 comprise, for example, V-grooves 511, 512 that accommodate the fiber end portions. The positioning elements 51, 52 are moveable so as to position the fiber ends and preferably align them with each other for an optimized low attenuation splice connection. Positioning element 51 can be moved up and down along a y-direction as indicated by respective arrows. Positioning element 52 can be moved back and forth along the x-direction. It is also useful that positioning elements 51 and 52 both are moveable in y- and x-directions. The positioning elements 51, 52 may be made from piezo-electric ceramics that can be controlled by electrical signals and generate a mechanical movement.

The heating electrodes 21, 22 transform an electrical current into an arc 221 which heats fiber ends 110, 120. When continuously applying heat through the arc 221, the ends 1101, 1201 begin to melt. When forwarding fiber end 1201 in z-direction towards fiber end 1101 by further positioning device 53, the fibers weld with each other. Surface tension effects will cause the fiber cores and fiber claddings to substantially align with each other when joining. Since surface tension effects compensate only for a certain amount of initial offset between the fibers, it is preferred that measurements take place to determine the initial offset between the fibers and perform an alignment before melting and joining the fibers to each other in order to improve the attenuation of the finished splice connection.

Cameras 31, 32 are provided for recording an image of the end portions of the fibers. The cameras may each comprise a sensor 311, 321 which may be a CCD array and electronic circuitry for reading the image taken with the CCD arrays. A control device 60 which may be a microprocessor evaluates the images taken with cameras 31, 32 and forwards control information to positioning elements 51, 52. The two cameras 31, 32 shown in Figure 1 are positioned in order to record a first and a second image from the to be spliced fiber ends. The first and second images are recorded from different directions, wherein the directions enclose an angle of preferably 90°. Other angles different from 90° are useful as well. In other embodiments only one camera 31 or 32 may be sufficient, wherein an optical arrangement known to a person skilled in the art will be used for projecting two images taken from different directions into the sensor of one single camera.

In preparation of the recording of an image, an arc is generated through the electrodes 21, 22. The electrical current for generating the arc is switched on and the arc 221 is immediately established between the ends of the electrodes 21, 22. The electrical current may be, for example, 15 mA or 16 mA. Other current intensities are also useful. The electric current will be supplied only for a short period of time which is sufficient to heat the fibers so that the fibers emit light. The duration of the current and the duration of the arc are limited to prevent the mirror end surfaces 1101, 1201 of the fibers from melting at this time. A suitable time for applying current to the electrodes 21, 22 and for generating the arc will be of less than 500 ms (milliseconds). Preferably, the arc will be generated for about 300 ms or less.

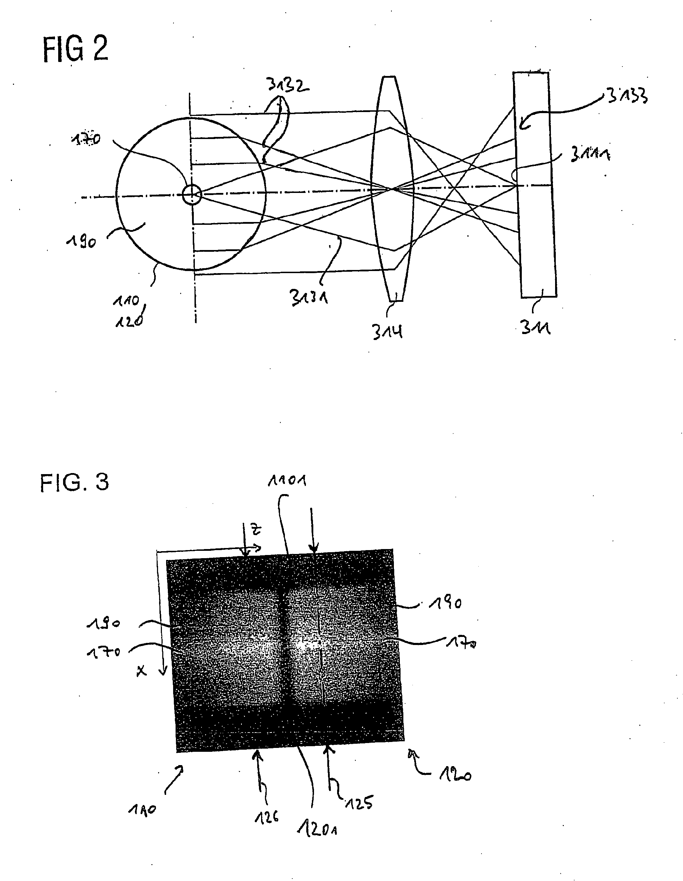

While heating the fibers, the fibers will emit radiation, for example, visible light. The light emitted by the cores of the fiber end portions has a higher intensity than the light emitted by the cladding of the fiber end portions. The emitted light beams are guided through an optical arrangement 326 onto sensor 311 of camera 31. The kind of optical arrangement 326 is shown in more detail in Figure 2. A corresponding optical arrangment 327 is applied to the light beam arriving at sensor 321 of camera 32. Figure 2 shows a lens within the optical arrangement 326 that has a suitable focal length. The position of the lens with respect to the position of the fiber ends and the position of the camera sensor is determined as follows. The radiation emitted by core 170 of one of the optical fibers, e.g. 120, travels substantially perpendicular through the surface of the cladding 190. The lens 314 is positioned such that radiation 3131 from the the core 170 generates a substantially sharp image 3111 at camera sensor level 311. The radiation 3132 that is emitted from the cladding of fiber 120 will be refracted when leaving the cladding material and entering into the ambient air so that its image at the camera sensor level 311 is little focused as shown with 3133. Overall, the sensor 311 of camera 31 receives an image from the visible light generated from end portions 120 of fiber 12 in response to arc 221 generated by electrodes 21, 22.

The image taken by sensor 311 of camera 31 is recorded after the fiber ends were heated for a suitable time, for example, after 270 ms. The arc will be switched off after 300 ms so that the image remains stable while the CCD sensor 311 is read out line by line and pixel by pixel by the electronic circuitry of camera 31. Other settings of electrode current, duration of current, time instant of the recording of the image and reading out the image from the CCD array are possible as well. In general, the reception level of the CCD array must be adapted to the heating duration so that the CCD array does not reach a saturated state. When the core of the fiber becomes visible in the sensor 311, the image can be started to be recorded, then read out and forwarded to processor 60. The duration of the arc should not be too long in order to prevent the fibers from losing their mirror shapes or from starting the glass material to melt.

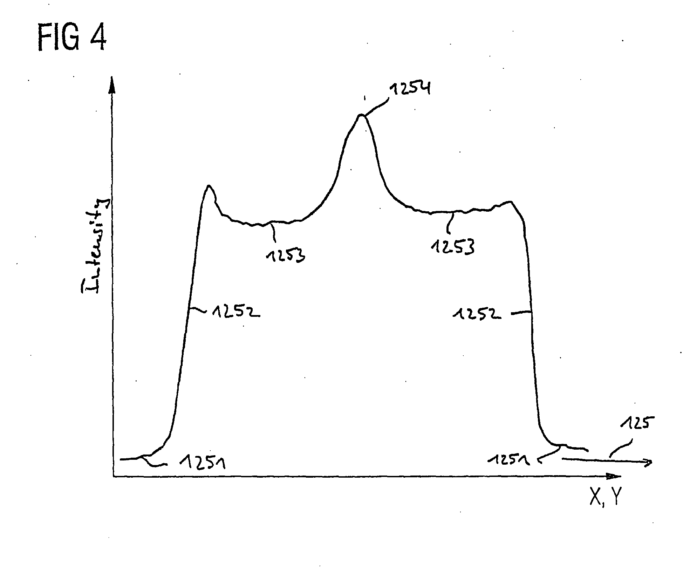

Figure 3 shows an example of an image picture taken from one of the cameras 31, 32. The image, e.g. from camera 31, shows the two end portions 110, 120 positioned adjacent with each other, so that the end surfaces 1101, 1201 oppose each other. The core areas 170 of both fiber ends are shown brighter than the cladding areas 190. To determine the position of the core 170 of fiber end 120, the intensity is taken along a line 125 which travels through the end portion 120 of the right-hand-sided fiber. In order to determine the core position of core 170 in left-hand-sided fiber 110 another scan along line 126 will be made in order to obtain a respective intensity profile. For example, the profile shown in Figure 4 was obtained along line 125 from Figure 3. The profile includes a background portion 1251, edge portions 1252 that are generated by the diffusely recorded outer contour portions of the cladding 190. The shoulder portions 1253 are disposed within the cladding 190. A peak section 1254 is generated by the fiber core 170. Through suitable algorithms it is possible to determine the edge portions 1252 and obtain the location of the outer contour of the cladding 190. Suitable algorithms are further available to determine the location of the intensity maximum 1254 which represents the fiber core. A similar intensity distribution may be taken along another scan line 126 which travels through the image of the end portion 110. Additional intensity distributions are taken along the other direction of observation y in camera 32. With the determination of the position 1254 of the cores 170 of both fibers 110, 120, along two different directions x, y, it is possible to determine the offset between the fibers and derive therefrom control information for operating positioning elements 51, 52 for aligning the fiber cores and keep the offset before splicing at a predetermined value. The predetermined offset may be determined in dependence on the excentricity of the fibers so that, after welding the fibers together, the cores are preferably connected with each other without offset. With the fiber cores aligned the attenuation of the connection between the splice fibers will be minimum.

Other characteristic values can also be derived from the recorded image shown in Figure 3. For example, the eccentricity for each fiber end can be calculated in each case from the center between the outer contours 1252 of the cladding 190 of each fiber and further from the distance between the center of the core 170. The eccentricity of each fiber is the difference between the center of the core and the center of the cladding. The alignment of the fibers for a subsequent splicing process may be based on the determined eccentricity of both to be spliced optical fibers. The eccentricity may be a value representing the distance between center of the fiber and the position of the core expressed, for example, in the unit of micrometers or as a percentage of the diameter of the fiber.

In another embodiment, it is useful to use the relative eccentricity of two fibers in order to align the cores of the two fiber ends with each other. For relative eccentricity it is useful to determine the relative difference between the two cores of the to be spliced fiber ends and the relative difference between the two claddings of the fiber ends and determine the differences between the relative differences of the cores and the relative differences of the claddings.

Several variations and alternative embodiments will become apparent to a person skilled in the art. For example, a single camera can be used instead of two cameras 31, 32 shown in Figure 1. The recording of two images from different directions within a single camera is enabled through optical devices available to a person skilled in the art. The angle between directions from which images are to be recorded may comprise 90°, may comprise about 90° or may comprise any other angle different from 0°. Further, apart from the shown electrodes 21, 22, other heating devices are suitable which generate sufficient heat in order to generate a light emitting process within the fiber ends. Preferably such heating devices are used later for heating the fibers again in order to melt the fiber ends and fuse the fibers together. Suitable heating devices comprise a laser that oscillates over the to be spliced sections of the fibers or a heating resistor like a heating coil that has sufficient power to melt the fiber ends. A CCD array may be replaced by another image sensor or another camera that is designed to and capable of recording an image. Instead of calculating the eccentricity of a fiber it may also be suitable to calculate the difference between the position of the core relative to the position of one of the two outer contours of the fiber cladding. Such value can be used for controlling the positioning elements 51, 52. The radiation emitted from the fibers may be in a range other than visible light, and a camera sensor must be sensitive for the frequencies of the emitted radiation.

The described method determines the position of the cores of the to be spliced optical fibers through the application of heat during a suitably defined short period of time. Then control unit 60 performs an evaluation in order to generate control signals for the positioning elements so that the to be spliced fiber ends are aligned most suitably with each other. Thereafter the heating device is operated again in order to heat and melt the optical fiber ends so that they can be fusion spliced. During the second heating period at least one fiber will be shifted along its longitudinal z-direction to generate an overlap of glass material in the splice region so that any material losses are compensated for. In addition, another image may be taken by the cameras in order to control the advancement of the splicing process and make suitable readjustments of the positioning elements. Such control process includes similar steps as described before in order to determine the core position and/or the eccentricity information for the to be spliced fiber ends.

While the above method is described in connection with the preferred embodiment in the field of splicing of fibers, the method of determining the core of a fiber can be used stand alone. Furthermore, while the method is described with respect to two fiber ends 110, 120, the method may be applied to the determination of the core or of the eccentricity of a single fiber end as well.

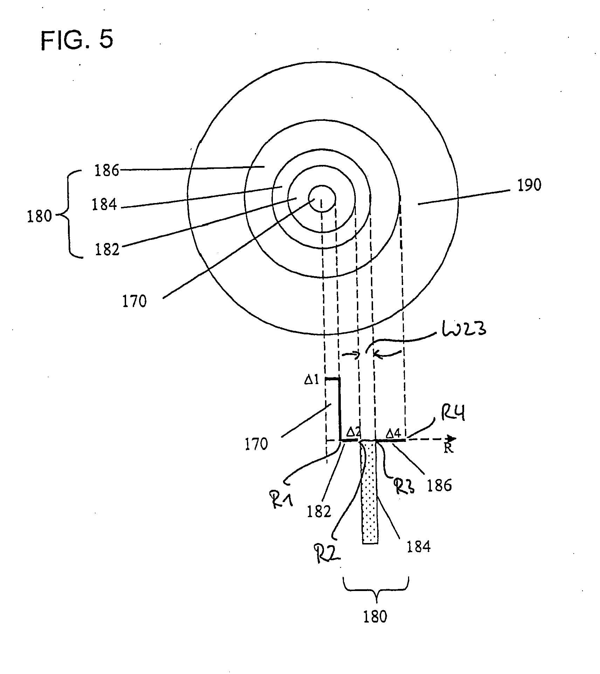

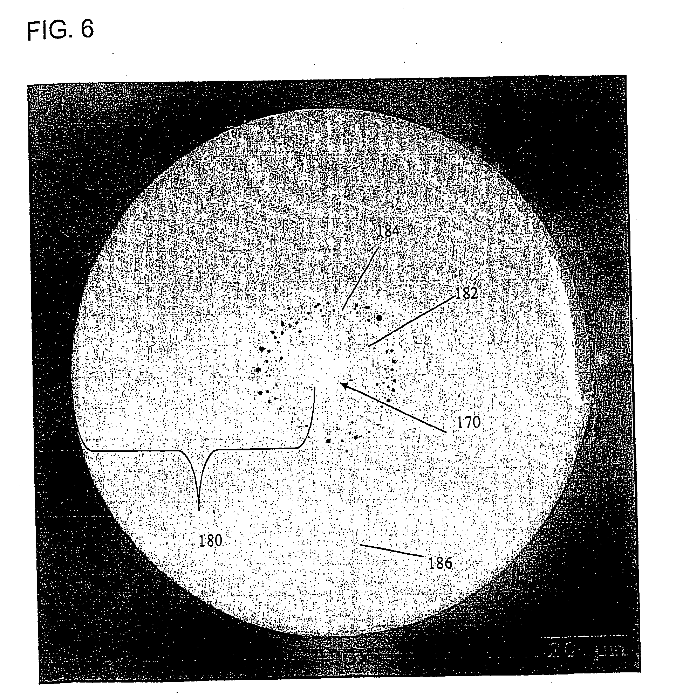

The inventors found that the disclosed method of heating an end of one fiber or the ends of at least two to be spliced fibers and recording an image of light emitted from the fiber ends is suitable for the positioning and splicing of novel fibers currently under development which are bend performance fibers that are bend insensitive or bend optimized and provide good optical performance when bent. One example of a bend optimized optical fiber is shown in Figure 5. A cross sectional photograph of a bend optimized optical fiber is shown in Figure 6.

The bend performance optical fiber includes a microstructure within the cladding. The microstructure comprises a region disposed within the cladding of the fiber which includes non-periodically disposed holes in said region. The holes may be randomly distributed within the region. Conventional methods that comprise illumination of a fiber end to determine the position of core and/or cladding are less suited for the mentioned novel bend optimized fibers since the holes will generate additional maxima and minima of the intensity of transmitted light within the taken image that makes core detection difficult. The multiple non-periodical surface transitions for raditation between silica glass material of the cladding and gas within the holes generate additional effects in an image taken from transmitted light so that the determination of the core and the outer contours of the cladding is rendered difficult. Further, the non-periodic distribution of holes is dependent on the orientation of the fiber and rotation of the fiber along its longitudinal access will change a recorded image. The method according to the invention comprising heating as described above is preferred over the illumination techniques. A possible explanation that may explain that the effects observed with conventional methods are not observed with the method according to the invention is that the holes within the region of the cladding may collapse during the short heating period so that the emission of light is less disturbed by possibly remaining holes or is not disturbed when substantially all holes have collapsed. Other explanations may apply also.

The inventors found at least that the microstructured optical fibers described below are preferably suited for the detection method described above.

Microstructured optical fibers are disclosed for use with this invention comprising a core region and a cladding region surrounding the core region, the cladding region comprising an annular hole-containing region comprised of non-periodically disposed holes such that the optical fiber is capable of single mode transmission at one or more wavelengths in one or more operating wavelength ranges. The core region and cladding region provide improved bend resistance, and single mode operation at wavelengths preferably greater than or equal to 1500 nm (nanometer), in some embodiments also greater than 1400 nm, in other embodiments also greater than 1260 nm. The optical fibers provide a mode field at a wavelength of 1310 nm preferably greater than 8.0 microns (µm; micrometer), more preferably between 8.0 and 10.0 microns. In preferred embodiments, optical fiber disclosed herein is thus single-mode transmission optical fiber.

In some embodiments, the microstructured optical fiber disclosed herein comprises a core region disposed about a longitudinal centerline, and a cladding region surrounding the core region, the cladding region comprising an annular hole-containing region comprised of non-periodically disposed holes,wherein the annular hole-containing region has a maximum radial width of less than 12 microns, the annular hole-containing region has a regional void area percent of less than 30 percent, and the non-periodically disposed holes have a mean diameter of less than 1550 nm.

By "non-periodically disposed" or "non-periodic distribuion", we mean that when one takes a cross section (such as a cross section perpendicular to the longitudinal axis) of the optical fiber, the non-periodically disposed holes are randomly or non-periodically distributed across a portion of the fiber. Similar cross sections taken at different points along the length of the fiber will reveal different cross-sectional hole patterns, i.e., various cross sections will have different hole patterns, wherein the distributions of holes and sizes of holes do not match. That is, the voids or holes are non-periodic, i.e., they are not periodically disposed within the fiber structure. These holes are stretched (elongated) along the length (i.e. in a direction generally parallel to the longitudinal axis) of the optical fiber, but do not extend the entire length of the entire fiber for typical lengths of transmission fiber.

For a variety of applications, it is desirable for the holes to be formed such that greater than 95% of and preferably all of the holes exhibit a mean hole size in the cladding for the optical fiber which is less than 1550 nm, more preferably less than 775 nm, most preferably less than about 390 nm. Likewise, it is preferable that the maximum diameter of the holes in the fiber be less than 7000 nm, more preferably less than 2000 nm, and even more preferably less than 1550 nm, and most preferably less than 775 nm. In some embodiments, the fibers disclosed herein have fewer than 5000 holes, in some embodiments also fewer than 1000 holes, and in other embodiments the total number of holes is fewer than 500 holes in a given optical fiber perpendicular cross-section. Of course, the most preferred fibers will exhibit combinations of these characteristics. Thus, for example, one particularly preferred embodiment of optical fiber would exhibit fewer than 200 holes in the optical fiber, the holes having a maximum diameter less than 1550 nm and a mean diameter less than 775 nm, although useful and bend resistant optical fibers can be achieved using larger and greater numbers of holes. The hole number, mean diameter, max diameter, and total void area percent of holes can all be calculated with the help of a scanning electron microscope at a magnification of about 800X and image analysis software, such as ImagePro, which is available from Media Cybernetics, Inc. of Silver Spring, Maryland, USA.

The optical fiber disclosed herein may or may not include germania or fluorine to also adjust the refractive index of the core and or cladding of the optical fiber, but these dopants can also be avoided in the intermediate annular region and instead, the holes (in combination with any gas or gases that may be disposed within the holes) can be used to adjust the manner in which light is guided down the core of the fiber. The hole-containing region may consist of undoped (pure) silica, thereby completely avoiding the use of any dopants in the hole-containing region, to achieve a decreased refractive index, or the hole-containing region may comprise doped silica, e.g. fluorine-doped silica having a plurality of holes.

In one set of embodiments, the core region includes doped silica to provide a positive refractive index relative to pure silica, e.g. germania doped silica. The core region is preferably hole-free. As illustrated in Figure 5, in some embodiments, the core region 170 comprises a single core segment having a positive maximum refractive index relative to pure silica Δ₁ in %, and the single core segment extends from the centerline to a radius R₁. In one set of embodiments, 0.30% < Δ₁ < 0.40%, and 3.0 µm < R₁ < 5.0 µm. In some embodiments, the single core segment has a refractive index profile with an alpha shape, where alpha is 6 or more, and in some embodiments alpha is 8 or more. In some embodiments, the inner annular hole-free region 182 extends from the core region to a radius R₂, wherein the inner annular hole-free region has a radial width W12, equal to R2 - R1, and W12 is greater than 1 µm. Radius R2 is preferably greater than 5 µm, more preferably greater than 6 µm. The intermediate annular hole-containing region 184 extends radially outward from R2 to radius R3 and has a radial width W23, equal to R3 - R2. The outer annular region 186 extends radially outward from R3 to radius R4. Radius R4 is the outermost radius of the silica portion of the optical fiber.

One or more coatings may be applied to the external surface of the silica portion of the optical fiber, starting at R4, the outermost diameter or outermost periphery of the glass part of the fiber. The core region 170 and the cladding region 180 are preferably comprised of silica. The core region 170 is preferably silica doped with one or more dopants. Preferably, the core region 170 is hole-free. The hole-containing region 184 has an inner radius R2 which is not more than 20 µm. In some embodiments, R2 is not less than 10 µm and not greater than 20 µm. In other embodiments, R2 is not less than 10 µm and not greater than 18 µm. In other embodiments, R2 is not less than 10 µm and not greater than 14 µm. The hole-containing region 184 has a radial width W23 which is not less than 0.5 µm. In some embodiments, W23 is not less than 0.5 µm and not greater than 20 µm. In other embodiments, W23 is not less than 2 µm and not greater than 12 µm. In other embodiments, W23 is not less than 2 µm and not greater than 10 µm.

Such fiber can be made to exhibit a fiber cutoff of less than 1400 nm, more preferably less than 1310 nm, a 20 mm (millimeter) macrobend induced loss of less than 1 dB/turn, preferably less than 0.5 dB/turn, even more preferably less than 0.1 dB/turn, still more preferably less than 0.05 dB/turn, yet more preferably less than 0.03 dB/turn, and even still more preferably less than 0.02 dB/turn, a 12 mm macrobend induced loss of less than 5 dB/turn, preferably less than 1 dB/turn, and more preferably less than 0.5 dB/turn, and a 8 mm macrobend induced loss of less than 5 dB/turn, preferably less than 1 dB/turn, more preferably less than 0.5 dB/turn.

An example of a suitable fiber is illustrated in Figure 6. The fiber in Figure 6 comprises a core region which is surrounded by a cladding region which comprises randomly disposed voids which are contained within an annular region spaced from the core and positioned to be effective to guide light along the core region.

## Claims

1. A method of detecting a core of an optical fiber, comprising:
operating a heating device (11, 12) for heating a bend optimized optical fiber (11, 12), said optical fiber having a core (170) and a cladding (190) surrounding the core;
heating the optical fiber (11, 12) during a short period of time so that the optical fiber emits light;
recording an image of light emitted by the optical fiber; determining the position of the core (170) of the optical fiber from the recorded image.

2. The method as of claim 1, comprising:
determining a distribution of the intensity of the emitted light along a scan line (125, 126) in the recorded image and determining said position of the core (170) of the optical fiber from the distribution.

3. The method as of claim 1 or 2, wherein heating the fiber comprises heating the fiber so that the cladding (190) emits light with a substantially different intensity than the core (170).

4. The method as of claim 3, wherein the core (170) emits light with higher intensity than the cladding (190).

5. The method as of any of claims 1 to 4, wherein heating the optical fiber during a short period of time comprises heating the fiber during a period of less than 500 milliseconds, preferably less than 300 milliseconds.

6. The method as of claim 5, wherein the heating of the optical fiber during a short period of time is stopped in response to the recording of the image being completed.

7. The method as of any of claims 1 to 6, wherein the recording of an image is started in response to the light emitted from the core (170) being detected.

8. The method as of any of claims 1 to 7, further comprising: determining the position of an outer contour (1252) of the cladding of the optical fiber from the recorded image and determining an eccentricity of the optical fiber from the position (1254) of the core and the position of the outer contour (1252).

9. The method as of any of claims 1 to 8, wherein said cladding of said optical fiber comprises a region (184) of non-periodically disposed holes.

10. The method as of one of claims 1 to 9, wherein said optical fiber is one of a bend insensitive and bend performance optical fiber.

11. The method as of claims 9 or 10, wherein said region (184) has a radial width of less than 12 micrometers.

12. The method as of one of claims 9 to 11, wherein said region (184) has a cross sectional area which is less than 30 percent of the cross sectional area of the optical fiber.

13. The method as of any of claims 9 to 12, wherein said holes have a cross sectional mean diameter of less than 1550 nanometers, more preferably of less than 775 nanometers and most preferably less than 390 nanometers.

14. The method as of any of claims 9 to 13, wherein said holes have a diameter of less than 7000 nanometers, preferably less than 2000 nanometers, more preferably of less than 1550 nanometers, and most preferably of less than 775 nanometers.

15. The method as of any of claims 9 to 14, wherein said region (184) has an inner radius (R2) extending from a center of the core (170) of the optical fiber to an inner end of the region (184) which is not less than 5 micrometers and not greater than 20 micrometers, preferably the inner radius (R2) is not less than 10 micrometers and not greater than 20 micrometers, and most preferably the inner radius (R2) is not less than 10 micrometers and not greater than 14 micrometers.

16. The method as of any of claims 9 to 15, wherein that region (184) has a width of not less than 0.5 micrometers and not greater than 20 micrometers, more preferably a width of not less than 2 micrometers and not greater than 12 micrometers, and most preferably a width of not less than 2 micrometers and not greater than 10 micrometers.

17. A method of connecting optical fibers, comprising:
positioning respective ends of a first optical fiber and a second optical fiber (11, 12) adjacent to each other, said first and second optical fibers having a core (170) and a cladding (190) surrounding the core and at least one of said first an second optical fibers being a bend optimized optical fiber;
operating a heating device (21, 22) for heating the optical fibers (11, 12) ;
heating said respective ends of the first and second optical fibers (11, 12) during a short period of time so that the optical fibers emit light;
recording an image of the light emitted by the first and second optical fibers (11, 12);
determining the position of the core (170) of at least one of the optical fibers and determining the position of the cladding (190) of the at least one of the optical fibers;
heating said respective ends again to connect the optical fibers (11, 12) in response to the step of determining.

18. The method as of claim 17, comprising:
aligning the fibers (11, 12) in response to the positions determined and then connecting the fibers.

19. The method as of claim 18, comprising:
determining a respective distribution of the intensity of the light emitted by each of the first and second optical fibers and performing the aligning of the fibers in dependence on the determined distribution.

20. The method as of any of claims 18 and 19, comprising:
determining a relative eccentricity of the cores (170) of the first and second optical fibers relative to each other and performing said aligning in response to the determined relative eccentricity.

21. The method as of any of claims 17 to 20, wherein said cladding (190) of at least one of said optical fibers comprises a region (184) of non-periodically disposed holes.

22. The method as of any of claims 17 to 21, wherein at least one of said optical fibers is one of bend insensitive and bend performance optical fiber.

23. The method as of claims 21 or 22, wherein said region (184) has a radial width of less than 12 micrometers.

24. The method as of one of claims 21 to 23, wherein said region (184) has a cross sectional area which is less than 30 percent of the cross sectional area of the optical fiber.

25. The method as of any of claims 21 to 24, wherein said holes have a cross sectional mean diameter of less than 1550 nanometers, more preferably of less than 775 nanometers and most preferably less than 390 nanometers.

26. The method as of any of claims 21 to 25, wherein said holes have a diameter of less than 7000 nanometers, preferably less than 2000 nanometers, more preferably of less than 1550 nanometers, and most preferably of less than 775 nanometers.

27. The method as of any of claims 21 to 26, wherein said region (184) has an inner radius (R2) extending from a center of the core of the optical fiber to an inner end of the region (184) which is not less than 5 micrometers and not greater than 20 micrometers, preferably the inner radius (R2) is not less than 10 micrometers and not greater than 20 micrometers, and most preferably the inner radius (R2) is not less than 10 micrometers and not greater than 14 micrometers.

28. The method as of any of claims 21 to 27, wherein that region (184) has a width of not less than 0.5 micrometers and not greater than 20 micrometers, more preferably a width of not less than 2 micrometers and not greater than 12 micrometers, and most preferably a width of not less than 2 micrometers and not greater than 10 micrometers.

29. A method of connecting a first and a second optical fiber, comprising:
positioning respective ends of the first and second optical fibers (11, 12) adjacent to each other;
performing the method according to any of claims 1 to 16; then aligning the first and second fibers (11, 12) in response to the determined positions of the core; connecting the fibers with each other.

30. An apparatus for connecting optical fibers, comprising:
positioning elements (51, 52) for positioning respective ends of a first optical fiber (11) and a second optical fiber (12) adjacent to each other, said fibers each having a core (170) and a cladding (190) surrounding said core and at least one of said first and second optical fibers being a bend optimized optical fiber;
a heating device (21, 22) for heating the optical fibers; said heating device configured to heat said respective ends of the first and second optical fibers during a short period of time so that the optical fibers emit light;
a sensor (311, 321) for recording an image of the light emitted by the first and second optical fibers;
a control unit (60) for determining the position of the core of at least one of the optical fibers and determining the position of the cladding of the at least one of the optical fiber;
said heating device (21, 22) configured to heat said respective ends again to connect the optical fibers in response to the determined position.

31. The apparatus as of claim 30, wherein said control unit (60) is configured to determine distributions of the intensity of the emitted light along scan lines (125, 126) in the recorded image and to determine said positions of the cores (170) of the optical fibers from each one of the distributions.

32. The apparatus as of claim 30 or 31, wherein said heating device (21, 22) heats the fibers so that the claddings (190) emit light with a substantially different intensity than the cores (170).

33. The apparatus as of any of claims 30 to 32, wherein the heating device (21, 22) heats the optical fibers during a short period of time which is less than 500 milliseconds, preferably less than 300 milliseconds.

34. The apparatus as of claim 33, wherein the heating device (21, 22) stops the heating of the optical fibers in response to the recording of the image being completed.

35. The apparatus as of any of claims 30 to 34, wherein the sensor (311, 321) starts the recording of an image in response to the light emitted from the cores being detected.

36. The apparatus as of any of claims 30 to 35, wherein the control device (60) determines the position of outer contours (1252) of the claddings of the optical fibers from the recorded image and determines an eccentricity of the optical fibers from the positions of the cores (1254) and the positions of the outer contours (1252).
